# EUROPEAN PATENT APPLICATION

(11) **EP 2 782 290 A1**
(43) Date of publication of application: **24.09.2014**
(21) Application number: 12849733.6
(22) Date of filing: 19.10.2012
(51) Int. Cl.: H04L 7/00, H04L 12/64

(54) **METHOD, SYSTEM AND APPARATUS FOR IMPLEMENTING HYBRID NETWORKING OF MULTIPLE CLOCK SYNCHRONIZATION TECHNOLOGIES**

(30) Priority: 15.11.2011 CN 201110362008
(71) Applicant: ZTE Corporation, Shenzhen, Guangdong 518057 (CN)
(72) Inventor: ZHANG, Junhui, Shenzhen Guangdong 518057 (CN); ZHAO, Hongguang, Shenzhen Guangdong 518057 (CN)
(74) Representative: Buchet, Anne
(86) International application number: PCT/CN2012/083200
(87) International publication number: WO 2013/071807

(57) **Abstract**

A method, system and apparatus for implementing hybrid networking of multiple clock synchronization technologies configure one master clock and one or more slave clocks for a synchronization device serving as both a clock synchronization service provider and a clock synchronization service receiver. The synchronization device sends clock source information to the slave clock of a neighboring synchronization device through the master clock, and receives the clock source information from the master clock of the neighboring synchronization device through the slave clock. Wherein, the synchronization devices being in the neighborhood refers to a direct physical connection or a connection across a network which does not support the clock synchronization technology. When a clock source fails in the case of hybrid networking of the physical clock technology and packet clock technology, the present scheme can make a PTP synchronization device perform switching normally and lock other clock sources, thereby solving the problem of the failure of the clock source switching in the case of hybrid networking.

## Description

### Technical Field

The present invention relates to the communication network technology field, and in particular, to a system and architecture for clock synchronization hybrid networking, and a method and apparatus for establishing and protecting a clock link topology and selecting a source for hybrid clock sources, in the case of hybrid networking by adopting two different clock synchronization technologies, a physical clock technology and a packet clock technology in a packet network.

### Background of the Related Art

With the development of the wireless communication technology, the telecommunication network is changed from the traditional circuit switching mode to the packet switching as well. This needs to solve how to realize the clock and time synchronization in the packet network. The standards of ITU-T G.826x series specify realizing the physical clock synchronization of the packet network by adopting the synchronization Ethernet; and IEEE 1588v2 specifies realizing the time synchronization and the clock synchronization by adopting the Precision Time Protocol (abbreviated as PTP). For the compatibility of the current traditional network and adapting to the development of the clock synchronization technology, it is inevitable to adopt different synchronization technologies for the hybrid networking. The current synchronous Ethernet (SyncE) and the synchronous digital hierarchy (SDH) network adopt the synchronization status message (abbreviated as SSM) protocol to finish the clock assignment and synchronization; for the network unable to support the synchronous Ethernet, such as the traditional router/ switch network and wireless microwave network, the PTP protocol or the network time protocol (NTP) must be utilized to finish the assignment and synchronization of the clock and time. Wherein, the former is a clock technology adopting the SSM protocol and is the physical clock technology, and the latter is the clock technology adopting the PTP or the NTP protocol and is the packet clock technology. When the hybrid networking is realized by adopting two kinds of synchronization technologies, it needs to solve and specify the problems under the hybrid networking situation, such as the topology establishment of the clock synchronization, the clock link protection and clock sources selection, etc.

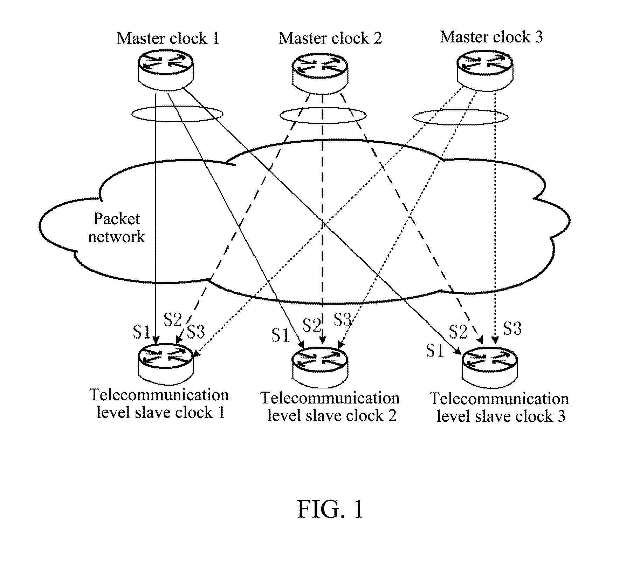

The ITU-T G.8265 and the G.8265.1 specify the common architecture of the PTP frequency synchronization and the telecommunication standard of the frequency assignment in the packet mode. As shown in FIG. 1, the specified synchronization architecture is similar to the Client/Server mode of the NTP protocol, that is, the synchronization network is divided into different PTP fields, and different PTP fields are isolated from each other; various master clocks (Master) belongs to different PTP fields, and the Masters are isolated therebetween and cannot communicate; the slave clock (Slave) can join a plurality of PTP fields, that is, one Slave can establish communication with a plurality of Masters and obtain the synchronization service; a plurality of logical Slave Only Ordinary Clock (abbreviated as SOOC) instances are established in each Slave, and each SOOC instance and corresponding Master perform the synchronization and frequency recovery. In addition, the roles of the Master and the Slave cannot be changed, which are stationary, that is, the Master can only be regarded as Master and the Slave can only be regarded as Slave; the Best Master Clock (abbreviated as BMC) algorithm is not allowed to automatically reconfigure the synchronization topology, that is, the PTP clock link is unidirectional. Finally, in view of requiring the conformity with the synchronization protection mode of the current SSM protocol, the ITU-T G.8265.1 does not adopt the default BMC (best master clock) algorithm specified by the IEEE1588v2, but specifies the alternate best master clock algorithm (Alternate BMCA) similar to the SSM source selection algorithm.

The current ITU-T G.8265 and G.8265.1 frequency synchronization telecommunication standard can work normally under the client/server architecture. However, in view of the factors such as the efficient usage of the resources and the network reliability and so on, the current telecommunication network architectures basically adopt the circular type, link type and their combination for the networking. In addition, the synchronization network needs to realize the reliable protection, for example, in the same geographic location, the hardware redundancy and the Master redundancy can be deployed; in different geographic locations, the independent Masters can be deployed to realize 1:1 and N: 1 protection. The SDH network or the synchronous Ethernet adopts the SSM protocol to perform the establishment of the frequency synchronization topology and the protection of the clock link; since the SSM frequency synchronization link is bidirectional, that is, after the master clock source fails, the network equipment will select and switch to a new clock source from other directions according to the calculation of the SSM protocol, thus guaranteeing the synchronization reliability.

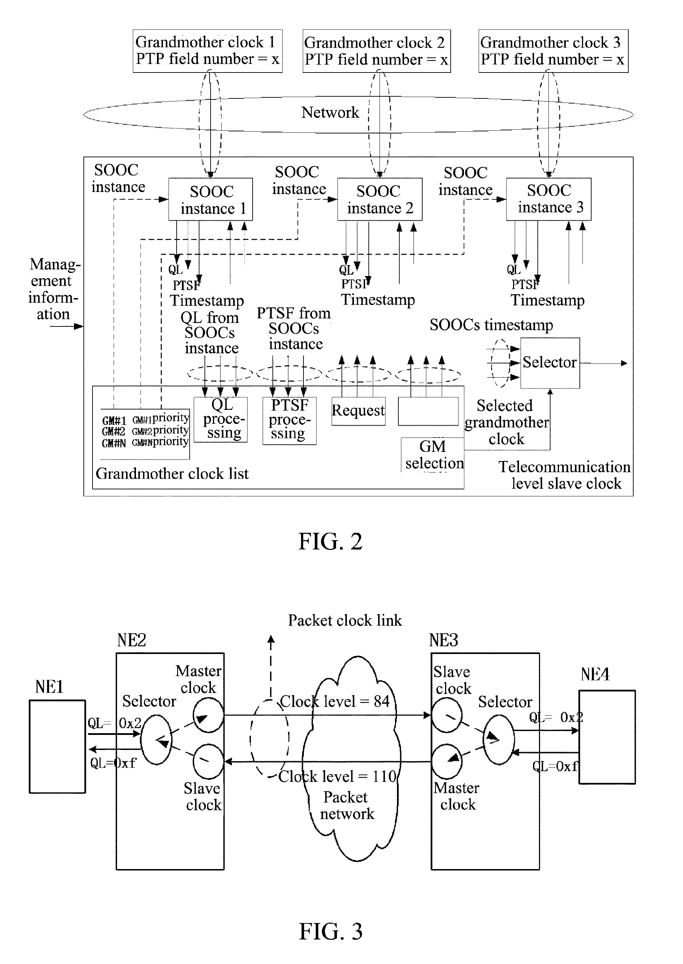

However, for the current ITU-T G.8265.1 standard, in case of hybrid networking, the current standard specification has the following problems: (1) its specified synchronization topology is a star-shaped architecture, and the equipment role is stationary, that is, the Master can only be regarded as Master, and the Slave can only be regarded as Slave, which is unable to be reconfigured automatically, so this kind of synchronization architecture is relatively suitable for the access layer network, while not suitable for the convergence layer and the core layer network adopting the circular topology; (2) as shown in FIG. 2, the direction of the frequency synchronization can only be from the Master (served as the Server) to the Slave (served as the Client), and this direction is stationary, that is, the clock synchronization link is unidirectional, therefore in the telecommunication network, when adopting different synchronization techniques to perform the hybrid networking, according to the current G.8265.1 standard specification, the establishment of the synchronization topology and the protection switching of the clock link cannot be completed like the SSM protocol, which will result in the synchronization failure. Therefore, in case of hybrid networking, such unidirectional clock link is not applicable. (3) As shown in FIG. 2, the current Alternate BMCA source selection algorithm only considers the packet clock source (such as PTP frequency parameters), such as the clock quality level (QL), the packet timing signal failure (PTSF) and the Priority of the packet clock source, without considering the physical clock source under the hybrid networking situation, such as SyncE frequency parameters, for example, the QL, Priority and signal failure (SF) of the physical clock source, therefore during hybrid networking, the Alternate BMCA algorithm cannot perform the correct establishment of the clock link topology, the clock link switching and the clock source selection, that is, the current G.8265.1 standard specification cannot solve the problem of mixed clock source selection under the hybrid networking situation. (4) in the current G.8265.1 frequency synchronization telecommunication standard, it is required to adopt a unicast message between the Master and the Slave to perform negotiation and the frequency synchronization, and in case of the hybrid networking, the networking is not flexible and inefficient.

### Content of the Invention

The technical problem that the present invention requires to solve is to provide an apparatus for implementing hybrid networking of multiple clock synchronization technologies, which solves the problem of establishment of the synchronization network and the clock link protection in the case of hybrid networking of different clock technologies.

In order to solve the above-mentioned technical problem, the present invention provides a method for implementing hybrid networking of multiple clock synchronization technologies, wherein,
one master clock and one or more slave clocks are configured for a synchronization device serving as both a clock synchronization service provider and a clock synchronization service receiver; the synchronization device sends clock source information through the master clock to the slave clock of a neighboring synchronization device, and receives the clock source information through the slave clock from the master clock of the neighboring synchronization device; wherein, the synchronization devices being in the neighborhood refers to a direct physical connection or a connection across a network which does not support the clock synchronization technology.

Preferably, the above-mentioned method further can have the following characteristics:
only one master clock is configured for the synchronization device only serving as the clock synchronization service provider, and the synchronization device sends the clock source information through the master clock to the slave clock of the neighboring synchronization device; and
one or more slave clocks are configured for the synchronization device only serving as the clock synchronization service receiver, and the synchronization device receives the clock source information through the slave clock from the master clock of the neighboring synchronization device.

Preferably, the above-mentioned method further can have the following characteristics:
when the synchronization device serving as both a clock synchronization service provider and a clock synchronization service receiver neighbors with other N synchronization devices serving as both the clock synchronization service provider and the clock synchronization service receiver, one master clock and N slave clocks are configured for the synchronization device, and one master clock and one slave clock are configured respectively for N neighboring synchronization devices, and the synchronization device sends the clock source information through the master clock to the slave clocks of other N neighboring synchronization devices, and receives the clock source information through N slave clocks from the master clocks of N neighboring synchronization devices respectively.

Preferably, the above-mentioned method further can have the following characteristics:
a forward path of the synchronization device sending the clock source information through the master clock to the slave clock of the neighboring synchronization device and a reverse path of the synchronization device receiving the clock source information through the slave clock from the master clock of the neighboring synchronization device are bound by using a precision time protocol (PTP) clock identity, a PTP port number or IP address information, to form a bidirectional packet clock link.

Preferably, the above-mentioned method further can have the following characteristics:
the synchronization device sends a clock source level indicating invalid along a path from the master clock of the synchronization device to the slave clock of the neighboring synchronization device to the neighboring synchronization device or stops sending the packet clock source information after locking a packet clock source of a neighboring synchronization device.

Preferably, the above-mentioned method further can have the following characteristics:
a physical clock link used for providing physical clock parameters for the synchronization device is configured for the synchronization device, and the synchronization device selects a best clock source from clock sources to be selected according to packet clock parameters and the physical clock parameters.

Preferably, the above-mentioned method further can have the following characteristics:
the synchronization device selects a best clock source from the physical clock sources under the situation that the clock sources to be selected include the packet clock sources and the physical clock sources and clock levels and priorities of various clock sources to be selected are same.

Preferably, the above-mentioned method further can have the following characteristics:
the synchronization device adopts a unicast or multicast mode when sending the clock source information through the master clock to the slave clock of the neighboring device.

In order to solve the above-mentioned technical problem, the present invention further provides a system for implementing hybrid networking of multiple clock synchronization technologies, wherein, the system comprises a synchronization device configuration module and synchronization devices connected cross a network which does not support the clock synchronization technology; and the synchronization device comprises a clock source processing module;
the synchronization device configuration module is configured to configure one master clock and one or more slave clocks for a synchronization device serving as both a clock synchronization service provider and a clock synchronization service receiver;
the clock source processing module is configured to: send clock source information through the master clock to the slave clock of a neighboring synchronization device and receive the clock source information through the slave clock from the master clock of the neighboring synchronization device when the synchronization device serves as both the clock synchronization service provider and the clock synchronization service receiver;
wherein, the synchronization devices being in the neighborhood refers to a direct physical connection or a connection across a network which does not support the clock synchronization technology.

Preferably, the above-mentioned system further can have the following characteristics:
the synchronization device configuration module is further configured to: configure only one master clock for the synchronization device only serving as the clock synchronization service provider, and configure one or more slave clocks for the synchronization device only serving as the clock synchronization service receiver; and
the clock source processing module is further configured to: send the clock source information through the master clock to the slave clock of the neighboring synchronization device when the synchronization device only serves as the clock synchronization service provider; and receive the clock source information through the slave clock from the master clock of the neighboring synchronization device when the synchronization device only serves as the clock synchronization service receiver.

Preferably, the above-mentioned system further can have the following characteristics:
the synchronization device configuration module is further configured to: bind a forward path of the synchronization device sending the clock source information through the master clock to the slave clock of the neighboring synchronization device and a reverse path of receiving the clock source information through the slave clock from the master clock of the neighboring synchronization device by using a precision time protocol (PTP) clock identity, a PTP port number or IP address information, to form a bidirectional packet clock link.

Preferably, the above-mentioned system further can have the following characteristics:
the synchronization device configuration module is further configured to: configure a physical clock link used for providing physical clock parameters for the synchronization device for the synchronization device; and
the clock source processing module is further configured to: select a best clock source from clock sources to be selected according to packet clock parameters and physical clock parameters.

In order to solve the above-mentioned technical problem, the present invention further provides an apparatus for implementing hybrid networking of multiple clock synchronization technologies, wherein, the apparatus is located in a synchronization device, and the apparatus comprises a clock source processing module; wherein, the clock source processing module comprises a packet clock system module; and the packet clock system module is configured to comprise one master clock and one or more slave clocks, and the packet clock system module sends clock source information through the master clock to the slave clock of a neighboring synchronization device and receives the clock source information through the slave clock from the master clock of the neighboring synchronization device when a synchronization device to which the apparatus belongs is served as both a clock synchronization service provider and a clock synchronization service receiver.

Preferably, the above-mentioned apparatus further can have the following characteristics:
the packet clock system module is further configured to: send the clock source information through the master clock to the slave clock of the neighboring synchronization device when the synchronization device to which the apparatus belongs is only served as the clock synchronization service provider; and receive the clock source information through the slave clock from the master clock of the neighboring synchronization device when the synchronization device to which the apparatus belongs is only served as the clock synchronization service receiver.

Preferably, the above-mentioned apparatus further can have the following characteristics:
the apparatus further comprises a physical clock system module and a clock source selection module;
the physical clock system module is configured to provide physical clock parameters for the synchronization device through a physical clock link; and
the clock source selection module is configured to select a best clock source from clock sources to be selected according to packet clock parameters obtained from the slave clock of the packet clock system module and physical clock parameters obtained from the physical clock system module.

### Brief Description of Drawings

FIG. 1 is a diagram of the frequency synchronization architecture and system structure of G.8265.1;
FIG. 2 is a structure diagram of a PTP clock source processing module in the PTP equipment;
FIG. 3 is a specific diagram of a method for implementing hybrid networking of multiple clock synchronization technologies;
FIG. 4 is another specific diagram of a method for implementing hybrid networking of multiple clock synchronization technologies;
FIG. 5 is a diagram of a clock source selection method under the hybrid networking;
FIG. 6 is a diagram of the clock synchronization system architecture under the hybrid networking;
FIG. 7 is a functional module structure diagram of a synchronization device under the hybrid networking;
FIG .8 is a diagram of all equipment locking a master clock source G.811 in a first stage according to a specific embodiment;
FIG .9 is a diagram of switching to a slave clock source G.812 when a master clock source fails in a second stage according to a specific embodiment;
FIG. 10 is a diagram of all equipment locking a slave clock source G.812 after switching in a third stage according to a specific embodiment.

### Preferred Embodiments of the Present Invention

The hybrid networking in the present scheme includes the network supporting the clock synchronization technology and the network not supporting the clock synchronization technology (such as, the traditional router, the switch network, the wireless microwave network, the OTN network and so on).

The method for implementing hybrid networking of multiple clock synchronization technologies includes: configuring one master clock and one or more slave clocks for a synchronization device serving as both a clock synchronization service provider and a clock synchronization service receiver; the synchronization device sending clock source information through the master clock to the slave clock of a neighboring synchronization device, and receiving the clock source information through the slave clock from the master clock of the neighboring synchronization device; wherein, the synchronization devices being in the neighborhood refers to a direct physical connection or a connection across a network which does not support the clock synchronization technology.

Through the above-mentioned method, the neighboring synchronization device can perform the bidirectional link communication. The forward and reverse frequency recovery can be completed and the bidirectional behavior can be completed, which plays an important role in the protection and switching of the clock link in the hybrid networking.

The specific description is as follows: when the synchronization device serving as both a clock synchronization service provider and a clock synchronization service receiver neighbors with other N synchronization devices serving as both the clock synchronization service provider and the clock synchronization service receiver, one master clock and N slave clocks are configured for the synchronization device, and one master clock and one slave clock are configured respectively for N neighboring synchronization devices, and the synchronization device sends the clock source information through the master clock to the slave clocks of other N neighboring synchronization devices, and receives the clock source information through N slave clocks from the master clocks of N neighboring synchronization devices respectively.

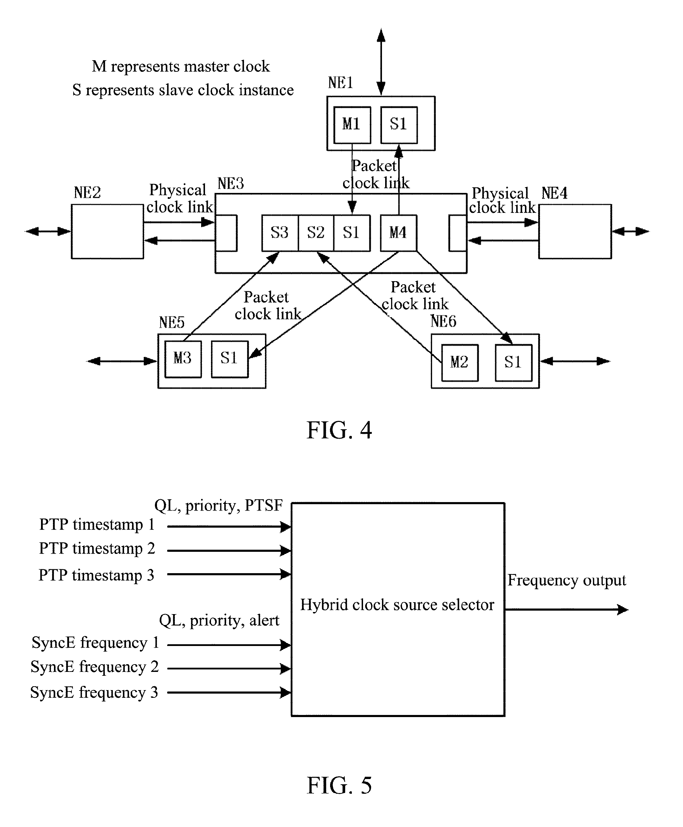

As shown in FIG. 3, one Master and one Slave instance are configured respectively for NE2 and NE3, and their port states are specified as Master and Slave; if the port state is Slave, then a signaling message is sent to the corresponding Master to request the frequency synchronization service; if the port state is Master, then the frequency synchronization service message is sent to the Slave if the frequency synchronization service request is received; as shown in FIG. 3, one Master and one Slave instance are configured for NE2, and the port state of the Master is specified as Master and the port state of the Slave instance is specified as Slave; in this way, the Slave can send the PTP signaling to the Master of the NE3 to request the clock synchronization service, and the Master can provide the clock synchronization service for the Slave of the NE3; as shown in FIG. 4, there are three PTP clock links and two SyncE clock links respectively in the NE3 equipment; the NE3 equipment is configured with one Master used for sending the frequency information to other equipment, and further configured with three Slave entities, used for receiving the frequency information from other equipment.

In the present scheme, only one master clock is configured for the synchronization device only serving as the clock synchronization service provider, and the synchronization device sends the clock source information through the master clock to the slave clock of the neighboring synchronization device; and one or more slave clocks are configured for the synchronization device only serving as the clock synchronization service receiver, and the synchronization device receives the clock source information through the slave clock from the master clock of the neighboring synchronization device. The method can realize the function requirement of different synchronization devices in the hybrid networking, and the synchronization device which is only required to be served as the clock synchronization service provider can configure the master clock only, and the one which is only required to be served as the clock synchronization service receiver can configure the slave clock only, which improves the system function.

In the present method, a forward path of the synchronization device sending the clock source information through the master clock to the slave clock of the neighboring synchronization device and a reverse path of receiving the clock source information through the slave clock from the master clock of the neighboring synchronization device are bound by using a precision time protocol (PTP) clock identity, a PTP port number or IP address information, to form a bidirectional packet clock link. That is, the link sending the frequency information and the link receiving the frequency information form a packet clock link, and that packet clock link can be bound by the information, such as PTP clock ID, PTP port number and/or IP address and so on; the PTP protocol performs the transmission, reception and processing of the message according to the binding relation and the relevant parameters; as shown in FIG. 3, in the NE2 equipment, the Master of the NE2 and the Slave of the NE3 form the forward clock link, the Master of the NE3 and the Slave of the NE2 form the reverse clock link; since the NE2 learns the relevant information of the NE3 through the PTP signaling, such as the clock ID, the PTP port number and the IP address and so on, these two clock links can be bound into one packet clock link; according to this binding relation, the packet clock link can realize the behavior of the physical clock link; as shown in FIG. 4, the NE3 and the NE1 have one PTP clock link which is composed of PTP channels in two directions; one direction is from M1 (that is, Master1) of the NE1 equipment to the S1 (that is, Slave1) of the NE3 equipment, and that direction is used for receiving the frequency information from the NE1; the other direction is from M4 (that is Master4) of the NE3 to S1 (that is, Slave1) of the NE1, and that direction is used for sending the frequency information to the NE1; the PTP channels in these two directions can form one PTP clock link through the information, such as the clock ID or the IP address, etc.

In the present method, the synchronization device sends a clock source level indicating invalid along a path from the master clock of the synchronization device to the slave clock of the neighboring synchronization device to the neighboring synchronization device or stops sending packet clock source information after locking a packet clock source of a neighboring synchronization device, to avoid the clock interlocking. For example: after the synchronization device locks the clock source of a certain packet clock link, then it sends the clock level information QL=0xf or stops sending the packet clock source information in the reverse direction of the link, to avoid the clock interlocking; and it sends the locked clock source information QL to other packet clock links and physical clock links at the same time; as shown in FIG. 3, assuming that the NE2 and the NE3 lock the clock source of QL=0x2 at the beginning, it specifically includes the following:
in the NE2 equipment, the NE2 locks the physical clock source of the NE1 (that is, the clock source of QL=0x2), and then, the Master will provide the packet clock source information for the NE3, and the mapped PTP clockClass =84;
in the NE3 equipment, the Slave instance obtains the packet clock source information, and the QL is the highest after the comparison by the selector, then the frequency signal source is locked; after locking, the message that QL=0xf (corresponding to PTP clockClass =110) is sent in the reverse direction of the packet clock link, which represents that the link clock is not available, or the transmission of the packet clock source information is stopped; meanwhile, the NE3 sends the physical clock source information of QL=0x2 to the NE4;
also as shown in FIG. 4, after the NE3 locks the packet clock source output by the NE1, then according to the binding relation, the NE3 notifies the M4 (that is, Master4) of the present equipment to send the clock level information of QL =0x0f (corresponding to clockClass=110) to the S1 (that is, Slave1) of the NE1 equipment, which represents that the frequency source is not available or the transmission of the packet clock source information is stopped, so the NE1 will not use or lock the frequency source output by the NE3, which avoids the interlocking; at the same time, for the other two PTP clock links, since there is no binding relation with the locked PTP clock link, the NE3 notifies the M4 to send the locked clock quality level (QL) information to the NE5 and the NE6; in addition, for the other two SyncE clock links, since they do not belong to the same type of frequency source, the NE3 sends the locked QL to the NE2 and the NE4;
in the present method, after the synchronization device locks the clock source of a certain physical clock link, then it sends QL=0xf in the reverse direction, to avoid the interlocking; meanwhile, it notifies the Master of the present equipment to output the QL information and the clock information to all packet clock links; for other physical clock links, it sends the normal QL information and the clock information; as shown in FIG. 4, when the NE3 locks the frequency source of the NE2, the NE3 sends the clock level information of QL=0x0f to the NE2, to avoid the interlocking; meanwhile, it sends the QL information and the clock information after locking to other physical clock links and all PTP clock links.

In the present method, a physical clock link used for providing physical clock parameters for the synchronization device is configured for the synchronization device, and both the physical clock link and the packet clock link participate in the clock source selection and provide the clock parameters, and the synchronization device selects a best clock source from clock sources to be selected according to packet clock parameters and the physical clock parameters. As shown in FIG. 4, the NE3 equipment has two SyncE clock links which are connected with the NE2 and the NE4 respectively; in addition, the NE3 has three PTP clock links which are connected with the NE1, the NE5 and the NE6 respectively; these input clock information is involved in the selection of the system clock, that is, according to the information, such as QL, local priority and signal failure alert and so on, received from these clock links, the NE3 equipment selects and locks one clock source therein and inputs into the system clock. The Alternate BMCA algorithm which improves the current standard in the present method makes the clock source selection consider the physical clock source parameters besides the packet clock source parameters; under the environment of the hybrid networking, the input frequency source can be a packet frequency source and also can be a physical frequency source.

The current G.8265.1 standard does not adopt the default BMC algorithm of the IEEE 1588v2, while formulates the new Alternate BMCA algorithm to finish the selection of the Master, and this algorithm adopts the source selection mechanism of the current SSM protocol, that is, the considered factors when selecting the clock source include: the clock quality level (QL), Priority and packet timing signal failure indication (PTSF).

Under the circumstance of the hybrid networking, due to the limitation of the architecture of the current G.8265.1, the Alternate BMCA algorithm can only select the packet clock source while cannot select the physical clock source; therefore, it is required to improve the current Alternate BMCA algorithm. As shown in FIG. 5, the specific hybrid clock source selection algorithm includes the following:
1, since the frequency recovery of the packet clock link is much slower than that of the physical clock link and it cannot be locked directly after receiving the QL, the PTP clock link is available only when the PTP is used as the slave end and the frequency (that is, the upstream master PTP source is locked by the frequency recovered by the PTP at the local slave end) is recovered normally, and the alert is set as cleared; otherwise, the PTP clock link is set as alert and cannot participate in the system clock selection;
2, the clock source with the highest clock level is selected at first when selecting the source, and the clock source can be a packet clock source and also can be a physical clock source;
3, if a plurality of input clock sources (the packet clock sources or the physical clock sources) have same QL, then the clock source with the highest priority is selected;
4, if a plurality of inputs have same clock level and same priority, due to the different characteristics of the packet clock sources and the physical clock sources, it needs to be analyzed according to the specific combination situation:
   (1), if all the current alternative clock sources are of the packet type, then the selection is performed by adopting the current G.8265.1 standard;
   (2), if all the current alternative clock sources are of the physical type, then the selection is performed by adopting the current G.781 and G.8264 standard;
   (3), if the current alternative clock sources are either of the packet type or of the physical type, then the physical clock source type is preferred, and a best physical clock source is selected from a plurality of physical clock sources according to the G.781/G.8264, because the stability of the packet clock source is not so good as that of the physical clock source;
5, if there is no input clock source available for selection, then a Holdover mode is entered when the input source is lost, or a free vibration mode is entered when there is no signal.

In the present method, the synchronization device adopts a unicast mode when requesting the clock synchronization service from the master clock of the neighboring synchronization device through the slave clock, and the synchronization device adopts a unicast mode or multicast mode when sending the clock source information through the master clock to the slave clock of the neighboring equipment. As shown in FIG. 4, the Slave entities of NE1, NE5 and NE6 request the clock synchronization service from the Master of the NE3 by the unicast mode; after the NE3 locks a certain clock source, then it notifies the Master of the present equipment to send the frequency information to other equipment through the unicast or multicast mode; compared with the mode that the current G.8265.1 can only provide the clock synchronization service by the unicast mode, this method can improve the efficiency.

A system for implementing hybrid networking of multiple clock synchronization technologies corresponding to the above-mentioned method includes a synchronization device configuration module and synchronization devices connected cross a network which does not support the clock synchronization technology; and the synchronization device comprises a clock source processing module; wherein
the synchronization device configuration module is configured to configure one master clock and one or more slave clocks for a synchronization device serving as both a clock synchronization service provider and a clock synchronization service receiver;
the clock source processing module is configured to: send clock source information through the master clock to the slave clock of a neighboring synchronization device and receive the clock source information through the slave clock from the master clock of the neighboring synchronization device when the synchronization device serves as both the clock synchronization service provider and the clock synchronization service receiver;
wherein, the synchronization devices being in the neighborhood refers to a direct physical connection or a connection across a network which does not support the clock synchronization technology.

In the above-mentioned synchronization system and architecture of the new clock synchronization hybrid networking, the role of equipment is not defined compulsorily, and this kind of equipment is similar to the boundary clock (BC) equipment, that is, the synchronization device can be regarded as the Master to provide the clock source service and also can be regarded as the Slave to receive the clock source service; such new synchronization system and architecture can be compatible with the current synchronization architecture and can be suitable for the network architectures, such as the star, circular, link shape and mesh network, etc.

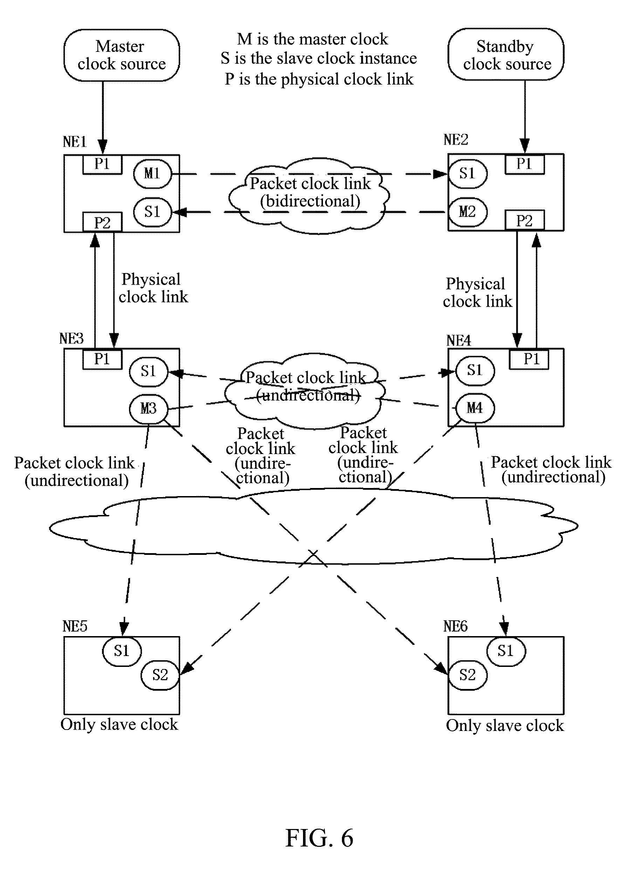

The synchronization device configuration module is further configured to: configure only one master clock for the synchronization device only serving as the clock synchronization service provider, and configure one or more slave clocks for the synchronization device only serving as the clock synchronization service receiver; and the clock source processing module is further configured to: send the clock source information through the master clock to the slave clock of the neighboring synchronization device when the synchronization device only serves as the clock synchronization service provider; and receive the clock source information through the slave clock from the master clock of the neighboring synchronization device when the synchronization device only serves as the clock synchronization service receiver. This configuration mode can realize the function requirements of different synchronization devices in the hybrid networking, and the synchronization device which is only required to be served as the clock synchronization service provider only need to configure the master clock, and the synchronization device which is only required to be served as the clock synchronization service receiver only need to configure the slave clock, to improve the system function. As shown in FIG. 6, the lower part is a star network, suitable for the access network. For example, some terminal devices are added through the wireless microwave, and they are protected by the dual-home mode; the packet clock link can adopt the current standard unidirectional link at this moment and also can adopt the bidirectional link; the upper part is a loop network, which adopts the annular link to realize the clock source protection, and it must adopt the bidirectional packet clock link at this moment.

The bidirectional clock link can be realized between the neighboring equipment in the above-mentioned system. As shown in FIG. 6, in the annular part, one or more packet clock links are configured in the PTP equipment, that is, one Master and one or more of Slave entities are configured, wherein, the Master is used for sending the frequency information to other equipment, the Slave instance is used for receiving the frequency information from other equipment; the function of this kind of PTP equipment is similar to the boundary clock (BC) equipment, and it can lock one clock source (physical clock source or packet clock source), and outputs the clock source to other equipment; the packet clock link is composed of two directions, including a link for sending the frequency information and a link for receiving the frequency information. The synchronization device configuration module is further configured to: bind a forward path of the synchronization device sending the clock source information through the master clock to the slave clock of the neighboring synchronization device and a reverse path of the synchronization device receiving the clock source information through the slave clock from the master clock of the neighboring synchronization device by using a precision time protocol (PTP) clock identity, a PTP port number or IP address information, to form a bidirectional packet clock link.

With the above-mentioned technical characteristics, the synchronization device in the present scheme can be regarded as the Master to provide the clock synchronization service and also can be regarded as the Slave to receive the clock synchronization service; comparing with the configuration mode that the current standard specification can only configure one role, that is, it can only be served as the Master or the Slave while it cannot be served as both the Master and the Slave, the present scheme has outstanding advantages.

The synchronization device configuration module is further configured to: configure a physical clock link used for providing physical clock parameters for the synchronization device for the synchronization device; and the clock source processing module is further configured to: select a best clock source from clock sources to be selected according to packet clock parameters and physical clock parameters. One or more physical clock links are configured in the synchronization device, that is, the clock link adopting the SSM technology, such as 2Mbis, SyncE, SDH and so on; within the synchronization device, these physical clock links and packet clock links participate in the clock source selection together, to select the best clock source as the system clock of the equipment.

The synchronization device configuration module is further configured to: configure a physical clock link used for providing physical clock parameters for the synchronization device for the synchronization device; and the clock source processing module is further configured to: select a best clock source from clock sources to be selected according to packet clock parameters and physical clock parameters. The improved Alternate BMCA algorithm for the hybrid source selection is adopted in the present scheme, so that the clock source selection considers the physical clock source parameters besides packet clock source parameters, thus realizing the hybrid clock source selection; as shown in FIG. 4, the input clock source of the NE3 includes three packet clock sources (that is, the PTP clock sources) and two physical clock sources (that is, the SyncE clock sources); but the NE3 can only select and lock one clock source therein as the best clock source; the specific source selection algorithm refers to the algorithm described in the above-mentioned method. In the scheme of the present invention, the packet clock link and the physical clock link of the synchronization device can be configured, and the hybrid source selection is realized, which has outstanding advantages compared with the limitation that only the packet clock link can be configured and only the selection of the packet clock sources can be implemented in the current standard specification.

The clock source processing module is further configured to send a clock source level indicating invalid along a path from the master clock of the synchronization device to the slave clock of the neighboring synchronization device to the neighboring synchronization device or stop sending packet clock source information after locking a packet clock source of the neighboring synchronization device, to avoid the clock interlocking.

For example: when finishing the selection of the hybrid clock source and locking a certain packet clock source, the clock level information QL=0xf is sent in the reverse direction of the packet clock link or the transmission of the packet clock source information is stopped; and the locked frequency source QL information is sent to other SyncE and PTP link; as shown in FIG. 3, after the Slave instance of the NE3 locks the clock of the NE2 (indicated by the blue solid line), it notifies the Master of the present equipment to send QL=0xf (clockClass of the corresponding PTP =110) to the NE2 (indicated by the red solid line) or the transmission of the packet clock source information is stopped; in this way, the NE2 would not lock the clock of the NE3, to avoid the interlocking;
the clock source processing module is further configured to, when finishing the selection of the hybrid clock source and when locking a certain physical clock source, send the SSM message of QL=0xf in the reverse direction of the clock link, and send the QL information of the locked clock source to other physical clock links; for the packet clock link, it notifies the Master of the present equipment to send the Announce message to other equipment, and the message carries the QL information of the locked clock source; as shown in FIG. 3, after the NE2 locks the NE1, it sends the SSM message of QL=0xf to the NE1 to represent that the link clock is invalid, and then the NE1 would not lock the NE2, thus avoiding the interlocking; meanwhile, the NE2 sends the PTP Announce message to the NE3, and this message carries the locked clock source level information (clockClass of PTP corresponding to QL=0x2 =84); when the NE3 receives the Announce message, it will lock the NE2 and sends the PTP Announce message to the NE2, and the message carries QL =0xf information (corresponding to PTP clockClass =110) to notify the NE2 that the link clock is not available, or the transmission of the packet clock source information is stopped, thus the NE2 will not lock the NE3 to avoid the interlocking.

The clock source processing module is further configured to adopt the unicast or the multicast mode when sending the clock source information through the master clock to the slave clock of the neighboring equipment. When the Slave instance requests the clock synchronization service from the Master of other equipment, it adopts the unicast mode; when the Master provides the clock synchronization service for the Slave, it adopts the unicast mode or the multicast mode. The present scheme can adopt the unicast or the multicast to realize the packet clock synchronization, and compared with the limitation that the packet clock synchronization can be implemented only by adopting the unicast mode and the multicast mode cannot be adopted in the current standard specification, the flexibility of the present scheme is good and the range of application is wider.

The present scheme provides an apparatus for implementing hybrid networking of multiple clock synchronization technologies located in a synchronization device, and the apparatus comprises a clock source processing module; wherein, the clock source processing module comprises a packet clock system module; and the packet clock system module comprises one master clock and one or more slave clocks, and the packet clock system module is configured to send clock source information through the master clock to the slave clock of a neighboring synchronization device and receive the clock source information through the slave clock from the master clock of the neighboring synchronization device when a synchronization device to which the apparatus belongs is served as both a clock synchronization service provider and a clock synchronization service receiver.

The packet clock system module is further configured to: send the clock source information through the master clock to the slave clock of the neighboring synchronization device when the synchronization device to which the apparatus belongs is only served as the clock synchronization service provider; and receive the clock source information through the slave clock from the master clock of the neighboring synchronization device when the synchronization device to which the apparatus belongs is only served as the clock synchronization service receiver.

The apparatus further comprises a physical clock system module and a clock source selection module;
the physical clock system module is configured to provide physical clock parameters for the synchronization device through a physical clock link; and the clock source selection module is configured to select a best clock source from clock sources to be selected according to packet clock parameters obtained from the slave clock of the packet clock system module and physical clock parameters obtained from the physical clock system module.

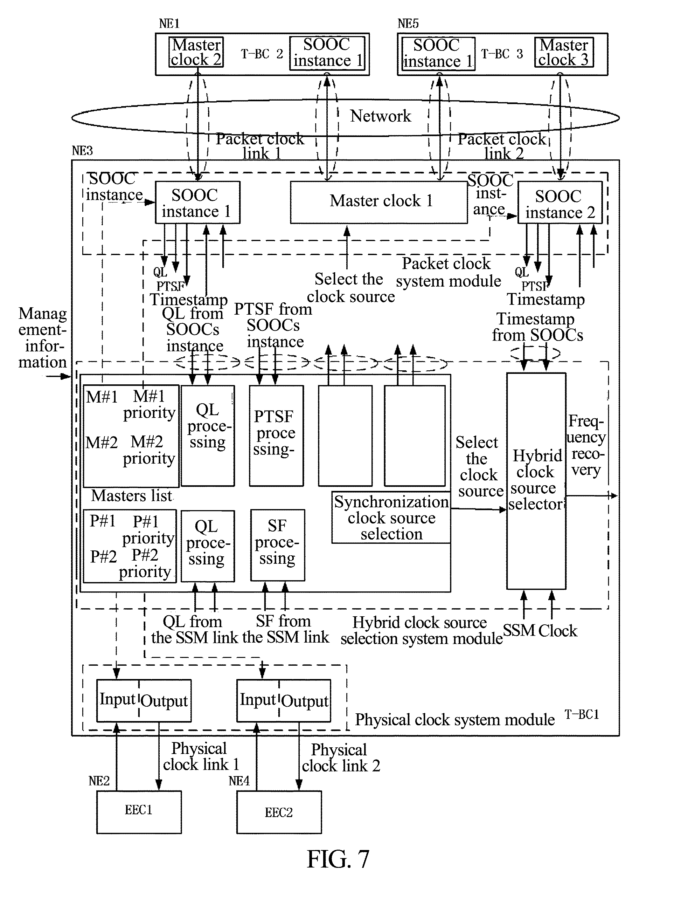

The present apparatus is described in detail by taking FIG. 7 as an example.

Packet clock system module:
the module includes one Master module and one or more Slave instance modules, wherein, the Master module is used for outputting the packet clock information through the PTP message, and the Slave instance module is used for receiving the packet clock information from the Master of other equipment;
   (1) input and output signals of the Slave module: the input signal of the Slave instance module includes: ENABLE_REQUESTING_UNICAST_ANNOUNCE (that is, the Slave requests the Master to send the Announce message to the Slave equipment through the unicast mode, and the Announce message carries the clock source parameters) and ENABLE_REQUESTING_SYNC_DEL_RESP (that is, the Slave requests the Master to send the Sync and Delay_Resp message to the Slave through the unicast mode, and the Sync and Delay_Resp message carries the timestamps, and the Slave can recover the clock signal according to the timestamps), and this signal is used for requesting the frequency synchronization service from the Master module of other equipment, and the Master will return the parameters of the present Master module, such as the information like the QL, the clock ID, the PTP port number and the IP address and so on, to the Slave module after receiving this request message, and then the Sync message and the Delay_Resp message carrying the Timestamps are sent, and the Slave can perform the frequency recovery according to the timestamps; the output signal of the Slave instance module includes: the QL, the packet timing signal failure (PTSF) and the timestamps, wherein the QL is the clock quality level information, used for clock source comparison and selection; the PTSF is the packet timing signal failure information, and it is a kind of alert signal, used for the clock source selection; the Timestamps are time stamps, used for the frequency recovery;
   (2) the input/output signal of the Master module:
the Master module is used for outputting the frequency information to the SOOC instance of other equipment; after the present equipment locks a certain clock source, the Master module stamps the timestamp information according to the locked clock source, and sends to other equipment through the Sync message and Delay_Resp message; when the present equipment enters a Holdover or self-vibration state, it will stamp the timestamp according to the clock of the present equipment, and sends to other equipment through the Sync message;
the output signal of the Master module includes the QL, the timestamp and other messages, used for outputting the frequency information;
Physical clock system module:
the physical clock system module includes an input module and an output module, wherein, the input module receives the physical clock signal and the SSM message from the external equipment, and the SSM message carries the QL information; the output module is used for outputting the physical clock signal and the clock level information, and when the input module locks a certain physical clock, the output module will send the SSM message QL=0xf to the correspondent equipment in a reverse direction, used for notifying that the output clock signal is not available, and the clock loop is avoided through this method;
Clock source selection module:
the present module includes three parts; the first is the packet clock part, used for inputting the parameters of the packet clock, including the QL, the Priority and the PTSF of the packet clock source; the second is the physical clock part, used for inputting the parameters of the physical clock, including the QL, the Priority and the signal failure alert of the physical clock source; the third is the hybrid clock source selection part, and the hybrid source selection algorithm is run in this part according to the packet clock parameters and the physical clock parameters, to select the best synchronization clock source as the system clock source.

The present scheme is described in detail through the specific embodiment hereinafter.

When there are two kinds of different clock synchronization technologies for the hybrid networking, the SyncE and the PTP, the specific steps of the clock source switching process are as follows.

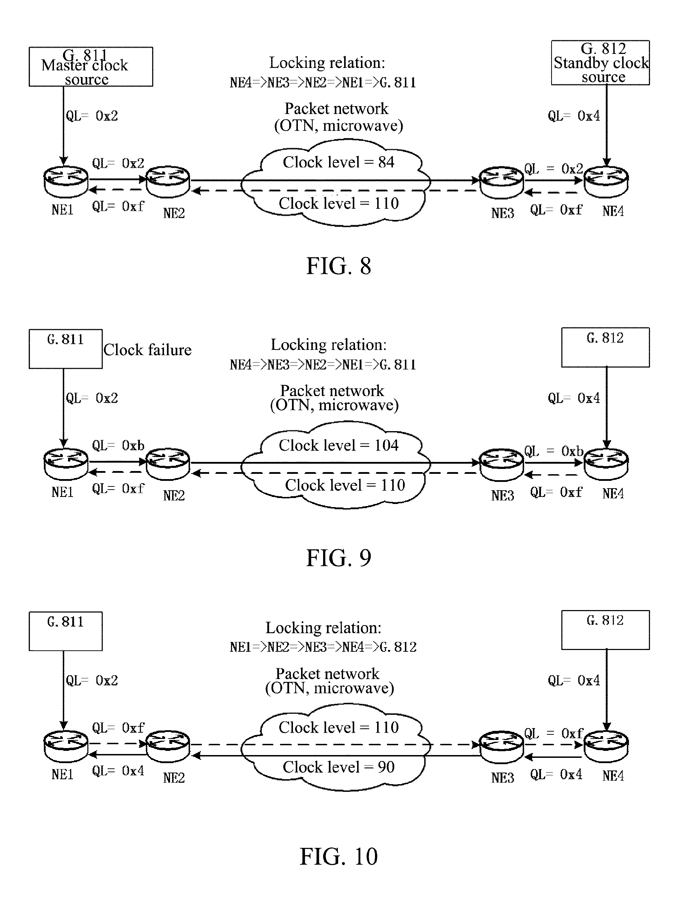

As shown in FIG. 8, all equipment locks the master clock source G.811 in the first stage, and the specific steps are as follows:
in step 1, at the beginning, all the equipment NE1, NE2, NE3 and NE4 are synchronized to the frequency source G.811, that is, the master clock is the external clock of the NE1, and the clock source at this point is configured as the external clock to receive from the NE2; the standby clock is the external clock of the NE4, and the clock source at this point is configured as the external clock to receive from the NE3; other points are configured with the line clocks in two neighboring directions. In the normal conditions, the whole network tracks the external clock of the NE1, as shown in FIG. 4;
the clock synchronization is completed by adopting the current defined process of SSM both between the NE1 and the NE2, and between the NE3 and the NE4;
it is a packet network between the NE2 and the NE3, to complete the frequency synchronization through the PTP;
at this moment, the QL level of the external clock in the input interface of the NE1 is the highest, so the NE1 locks the external clock source, transmits 0xf reversely, and transmits the QL=0x2 to the NE2;
the NE2 makes the SyncE physical clock of the NE1 together with the packet clock of the PTP Slave to participate in the system clock selection, and since the clock QL input by the NE1 is the highest, no matter whether the PTP packet clock is recovered or not, the NE2 will lock the NE1 and send 0xf to the NE1, and NE2 sends the QL=0x2 to the NE3 through the PTP Master, and the mapped clockClass = 84;
similarly, in the NE3, when the PTP Slave clock is recovered successfully, it will lock the PTP packet clock source of NE2; and NE3 sends QL= 0xf (the mapped clockClass = 110) to the NE2 through the PTP Master or stops sending the packet clock source information to the NE2, and NE3 sends QL = 0x2 clock information to the NE4 at the same time;
similarly, the NE4 will select and lock the NE3 according to the standard SSM and sends QL =0xf to the NE3 to prevent the NE3 from locking the NE4, that is, avoiding the interlocking.

As shown in FIG. 9, in the second stage, it is switched to the standby clock source G.812 when the master clock source fails. When the external clock of the NE1 fails, the NE1 enters Holdover or self-vibration state, the QL level is changed to a local level 0x0b, and it sends QL=0x0b to the NE2; the clock source state of NE2 is not changed, but QL =0x0b is sent, and the QL =0x0b is eventually transmitted to the NE4. Specific steps include:
(1), the NE1 detects that the external clock is lost, since there is no available clock source at present, the NE1 enters Holdover or self-vibration, and the system clock level is degraded to 0xb; and it is sent to the NE2;
(2), the NE2 knows that the degradation of the QL of the NE1, and since there is no other better system clock, the NE2 still locks the NE1, and the level sent to the NE3 is degraded as 0x0b (mapped as: clockClass = 104) as well;
(3) similarly, the NE3 still locks the NE2, and the QL level sent to the NE4 is degraded to 0x0b.

FIG. 10 describes that all equipment locks the standby clock source G.812 after switching in the third stage in the specific embodiment. The NE4 starts the switching and switches to the external clock of the present point from the direction to the NE3, and the QL sent to the NE3 is changed to 0x04 to enable the NE3 to perform switching, and the switching is performed sequentially, eventually for the NE1 to finish the protection. The specific steps are:
(1), the NE4 compares the QL of the external clock with the QL transmitted by the NE3, and it will find the degradation of the NE3 at this moment, and it is not higher as the QL of the external clock interface, so the NE4 switches to lock the external clock and sends the QL level changing from 0xf to 0x4 to the NE3;
(2), the NE3 knows that the QL level of the NE4 is upgraded, and then turns to lock the NE4 and transmits the 0xf to the NE4, and the QL level sent through the PTP Master to the NE2 is changed from 0xf to 0x04, that is, the clockClass is changed from 110 to 90;
(3) similarly, the NE2 will turn to lock the NE3, and the NE1 turns to lock the NE2, at this moment, the switching is finished.

It should be illustrated that, in the case of not conflicting, the embodiments in the present application and features in these embodiments can be combined with each other at random.

Certainly, there are many other embodiments in the present invention. Without departing from the spirit and essence of the invention, those skilled in the art can make the corresponding modifications and transformations according to the invention, but these corresponding modifications and transformations are all included in the protection scope of the appended claims of the invention.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

### Industrial Applicability

The solution provided by the present scheme correspondingly solves the problem of the related art. First of all, (1) a clock synchronization system or architecture for the hybrid networking is adopted, and the new clock synchronization system can be compatible with the current synchronization system, not only suitable for the star network, but also suitable for the complicated network topology such as the ring, the link shape and the mesh network, etc.; (2) the bidirectional PTP clock link is realized, that is, one Master is configured, and used for sending the frequency information to other equipment, that is, performing the frequency recovery in the forward direction, and in addition one or more of Slave instances are configured, and used for receiving the frequency information from other Master, that is, performing the frequency recovery in the reverse direction; thus, in case of the physical clock technology and the packet clock technology for the hybrid networking, when the clock source is invalid, the PTP synchronization device is made to be switching normally and lock other clock sources, which solves the problem that the clock source switching is invalid under the hybrid networking situation; (3) the current standard Alternate BMCA algorithm is improved, to make the clock source selection also consider the SSM frequency parameter besides the PTP frequency parameters, thus solving the problem of clock source selection during the hybrid networking; (4) the Slave adopts the unicast mode when requesting the clock synchronization service from the Master, and the Master can adopt the unicast or the multicast when providing the synchronization service for the Slave, which increases the system efficiency and the flexibility of the networking; through adopting the above-mentioned method, it solves the problem, such as the establishment of the clock topology, the clock link protection and the clock source selection and so on under the physical clock technology and the packet clock technology for the hybrid networking, which expands the range of application of the clock synchronization service.

## Claims

1. A method for implementing hybrid networking of multiple clock synchronization technologies, wherein,
one master clock and one or more slave clocks are configured for a synchronization device serving as both a clock synchronization service provider and a clock synchronization service receiver, and the synchronization device sends clock source information through the master clock to the slave clock of a neighboring synchronization device and receives the clock source information through the slave clock from the master clock of the neighboring synchronization device, wherein the synchronization devices being in the neighborhood refers to a direct physical connection or a connection across a network which does not support the clock synchronization technologies.

2. The method according to claim 1, wherein,
only one master clock is configured for the synchronization device only serving as the clock synchronization service provider, and the synchronization device sends the clock source information through the master clock to the slave clock of the neighboring synchronization device; and
one or more slave clocks are configured for the synchronization device only serving as the clock synchronization service receiver, and the synchronization device receives the clock source information through the slave clock from the master clock of the neighboring synchronization device.

3. The method according to claim 1, wherein,
when the synchronization device serving as both the clock synchronization service provider and the clock synchronization service receiver neighbors with other N synchronization devices serving as both the clock synchronization service provider and the clock synchronization service receiver, one master clock and N slave clocks are configured for the synchronization device, and one master clock and one slave clock are configured respectively for N neighboring synchronization devices, and the synchronization device sends the clock source information through the master clock to the slave clocks of other N neighboring synchronization devices and receives the clock source information through N slave clocks from the master clocks of N neighboring synchronization devices respectively.

4. The method according to claim 1, wherein,
a forward path of the synchronization device sending the clock source information through the master clock to the slave clock of the neighboring synchronization device and a reverse path of the synchronization device receiving the clock source information through the slave clock from the master clock of the neighboring synchronization device are bound by using a precision time protocol (PTP) clock identity, a PTP port number or IP address information, to form a bidirectional packet clock link.

5. The method according to claim 1, wherein,
the synchronization device sends a clock source level indicating invalid along a path from the master clock of the synchronization device to the slave clock of the neighboring synchronization device to the neighboring synchronization device or stops sending packet clock source information after locking a packet clock source of a neighboring synchronization device.

6. The method according to claim 1, wherein,
a physical clock link used for providing physical clock parameters for the synchronization device is configured for the synchronization device, and the synchronization device selects a best clock source from clock sources to be selected according to packet clock parameters and the physical clock parameters.

7. The method according to claim 6, wherein,
the synchronization device selects a best clock source from physical clock sources under a situation that the clock sources to be selected include packet clock sources and physical clock sources and clock levels and a priorities of various clock sources to be selected are same.

8. The method according to claim 1, wherein,
the synchronization device adopts a unicast or multicast mode when sending the clock source information through the master clock to the slave clock of the neighboring device.

9. A system for implementing hybrid networking of multiple clock synchronization technologies, wherein the system comprises a synchronization device configuration module and a synchronization device connected cross a network which does not support the clock synchronization technologies; and the synchronization device comprises a clock source processing module;
the synchronization device configuration module is configured to configure one master clock and one or more slave clocks for a synchronization device serving as both a clock synchronization service provider and a clock synchronization service receiver;
the clock source processing module is configured to: send clock source information through the master clock to the slave clock of a neighboring synchronization device and receive the clock source information through the slave clock from the master clock of the neighboring synchronization device when the synchronization device serves as both the clock synchronization service provider and the clock synchronization service receiver;
wherein, the synchronization devices being in the neighborhood refers to a direct physical connection or a connection across a network which does not support the clock synchronization technologies.

10. The system according to claim 9, wherein,
the synchronization device configuration module is further configured to: configure only one master clock for the synchronization device only serving as the clock synchronization service provider, and configure one or more slave clocks for the synchronization device only serving as the clock synchronization service receiver; and
the clock source processing module is further configured to: send the clock source information through the master clock to the slave clock of the neighboring synchronization device when the synchronization device only serves as the clock synchronization service provider; and receive the clock source information through the slave clock from the master clock of the neighboring synchronization device when the synchronization device only serves as the clock synchronization service receiver.

11. The system according to claim 9, wherein,
the synchronization device configuration module is further configured to: bind a forward path of the synchronization device sending the clock source information through the master clock to the slave clock of the neighboring synchronization device and a reverse path of the synchronization device receiving the clock source information through the slave clock from the master clock of the neighboring synchronization device by using a precision time protocol (PTP) clock identity, a PTP port number or IP address information, to form a bidirectional packet clock link.

12. The system according to claim 9, wherein,
the synchronization device configuration module is further configured to: configure a physical clock link used for providing physical clock parameters for the synchronization device for the synchronization device; and
the clock source processing module is further configured to: select a best clock source from clock sources to be selected according to packet clock parameters and the physical clock parameters.

13. An apparatus for implementing hybrid networking of multiple clock synchronization technologies, wherein the apparatus is located in a synchronization device, and the apparatus comprises a clock source processing module; wherein,
the clock source processing module comprises a packet clock system module; and
the packet clock system module is configured to comprise one master clock and one or more slave clocks, and the packet clock system module sends clock source information through the master clock to the slave clock of a neighboring synchronization device and receives the clock source information through the slave clock from the master clock of the neighboring synchronization device when the synchronization device to which the apparatus belongs is served as both a clock synchronization service provider and a clock synchronization service receiver.

14. The apparatus according to claim 13, wherein,
the packet clock system module is further configured to: send the clock source information through the master clock to the slave clock of the neighboring synchronization device when the synchronization device to which the apparatus belongs is only served as the clock synchronization service provider; and receive the clock source information through the slave clock from the master clock of the neighboring synchronization device when the synchronization device to which the apparatus belongs is only served as the clock synchronization service receiver.

15. The apparatus according to claim 13, wherein,
the apparatus further comprises a physical clock system module and a clock source selection module;
the physical clock system module is configured to provide physical clock parameters for the synchronization device through a physical clock link; and
the clock source selection module is configured to select a best clock source from clock sources to be selected according to packet clock parameters obtained from the slave clock of the packet clock system module and physical clock parameters obtained from the physical clock system module.
